# EUROPÄISCHE PATENTANMELDUNG

(11) **EP 1 902 830 A1**
(43) Veröffentlichungstag der Anmeldung: **26.03.2008**
(21) Anmeldenummer: 06019544.3
(22) Anmeldetag: 19.09.2006
(51) Int. Cl.: B29C 70/50, B29L 31/30

(54) **Verfahren zur Herstellung eines thermoplastisch verformbaren Verbundwerkstoffs mit einer hydrophobierten Schicht**

(71) Anmelder: Quadrant Plastic Composites AG, 5600 Lenzburg (CH)
(72) Erfinder: Keilbach, Andreas, 79725 Laufenburg/Baden (DE); Dittmar, Harry, 67271 Battenberg (DE)
(74) Vertreter: Felder, Peter

(57) **Zusammenfassung**

Die Erfindung betrifft ein Verfahren zur Herstellung eines thermoplastisch verformbaren Verbundwerkstoffs, bei dem ein Mischvlies aus Thermoplastfasern und Verstärkungsfasern zusammen mit einem hydrophobierten Mischfaservlies aus Polyethylenterephthalatfasern und Polypropylenfasern heiss verpresst wird.

## Beschreibung

Die Erfindung betrifft ein Verfahren zur Herstellung eines thermoplastisch verformbaren Verbundwerkstoffs, bei dem Thermoplastfasern und Verstärkungsfasem miteinander vermischt, das erhaltene Mischvlies durch Nadeln verfestigt, das verfestigte Mischvlies erwärmt und anschliessend heiss verpresst wird, wobei Funktionsschichten mitverpresst werden. Sie betrifft ferner einen Verbundwerkstoff mit speziellen Funktionsschichten.

Thermoplastisch verformbare Halbzeuge, welche Verstärkungsfasern, insbesondere Glasfasern enthalten, werden in verstärktem Masse zur Herstellung von Formteilen, insbesondere für den Kraftfahzeugsektor, eingesetzt.

In der WO 02/062563 ist ein besonders elegantes kontinuierliches Verfahren zur Herstellung derartiger Halbzeuge beschrieben. Dieses Verfahren umfasst folgende Verfahrensstufen:
A. Thermoplastfasern und Verstärkungsfasern werden trocken miteinander zu einer endlosen Bahn vermischt,
B. das erhaltene Mischvlies wird durch Nadeln verfestigt,
C. das verfestigte Mischvlies wird auf Temperaturen oberhalb der Erweichungstemperatur des Thermoplasten erwärmt und
D. anschliessend wird das erwärmte Mischvlies heiss verpresst, wobei in Stufe D Funktionsschichten mitverpresst werden können.

Für manche Anwendungszwecke, insbesondere im Kraftfahrzeug- Aussenbereich sollten aus die dem Halbzeug hergestellten Fertigteile eine verbesserte Schallabsorption, einen guten Steinschlagschutz aufweisen und vor allem sollte eine Wasseraufnahme weitgehend ausgeschlossen sein.

Der Erfindung lag also die Aufgabe zugrunde, derartige Halbzeuge bereitzustellen.

Diese Aufgabe wird erfindungsgemäss dadurch gelöst, dass bei dem oben beschriebenen Verfahren in Stufe D
- auf dem erwärmten Mischvlies a)
   entweder
- auf beiden Seiten ein hydrophobiertes Mischfaservlies b) aus Polyethylenterephthalatfasern (PET-Fasern) und Polypropylenfasern (PP-Fasern)
   oder
- auf einer Seite das hydrophobierte Mischfaservlies b)
- und auf der anderen Seite eine Thermoplastfolie c)
   mitverpresst wird.

Die EP-A 758 577 beschreibt ein verformbares flächiges Halbzeug, das nach dem "Papierverfahren" hergestellt wird durch Dispergieren von Schnittglasfasern Thermoplastpartikein und Thermoplastfasern in der wässrigen Lösung eines Emulgiermittels, Abpressen des Wassers, Trocknen und Heissverpressen, wobe vor dem Heissverpressen Polyesterfaservliese und/oder Thermoplastfolien auflaminiert werden können. Die dabei erhaltene Platte wird thermisch zu einem porösen Halbzeug expandiert. Da die Glasfasern nicht genadelt sind, sind sie auch nicht zerbrochen und weisen eine einheitlich gleiche Länge auf; ausserdem sind sie weitgehend zweidimensional in einer Ebene angeordnet. Dies alles hat zur Folge, dass das Halbzeug nur eine geringe Tiefziehfähigkeit aufweist und beim Verpressen nur geringe Wanddickenunterschiede möglich sind. Vor allem aber weisen sie als Funktionsschichten nur Polyestervliese und keine hydrophobierte Mischfaservliese aus PET-Fasern und PP-Fasern auf.

Das erfindungsgemässe Verfahren umfasst folgende Verfahrensschritte:
A. Thermoplastfasern und vorzugsweise individuelle, nicht gebundene Verstärkungsfasern werden miteinander vermischt. Als Thermoplasten kommen grundsätzlich alle verspinnbaren thermoplastischen Kunststoffe in Frage, z.B. Polyolefine, wie Polyethylen und Polypropylen, Polyamide, niedrig schmelzende lineare Polyester, thermoplastische Polyurethane, Polycarbonat, Polyacetale, sowie entsprechende Copolymere und Polymermischungen. Besonders bevorzugt ist Polypropylen mit einem MFI (230 °C, 2.16 kg) nach DIN 53735 grösser als 20, vorzugsweise zwischen 25 und 150 g/10min. Die Thermoplastfasern weisen im Allgemeinen eine mittlere Länge (Gewichtsmittel) von 20 bis 120 mm auf.
   Bevorzugte Verstärkungsfasern sind Glasfasern, daneben können auch Kohlenstofffasern, Basaltfasern und Aramidfasern eingesetzt werden, ferner Naturfasern, z.B. aus Flachs, Jute, Hanf, Kenaf und Sisal. Die Verstärkungsfasern weisen im Allgemeinen ebenfalls eine mittlere Länge von 20 bis 120 mm auf. In einer speziellen Ausführungsform der Erfindung unterscheiden sich die mittleren Längen der Thermoplastfasern und Verstärkungsfasem um nicht mehr als 25%, vorzugsweise um maximal 10%. Die bevorzugten Glasfasern können als Endlosfasern oder als Schnittfasern mit eine Länge von beispielsweise 1 inch (25,4 mm), 2 inch oder 3 inch bezogen werden. In der Praxis schneidet man die Thermoplastfasern und Glasfasern auf etwa die gleiche Länge im Bereich zwischen 25 und 55 mm.
   Die Thermoplastfasern und Verstärkungsfasem werden im Gewichtsverhältnis 10 : 90 bis 80 : 20, vorzugsweise 20 : 80 bis 60 : 40 miteinander vermischt. Das Vermischen kann nach in der Textiltechnologie üblichen Verfahren, z.B. nach dem Airlay- oder Krempel- Verfahren vorgenommen werden. Beim Vermischen entsteht ein als endloses Band vorliegendes Mischvlies mit einem Flächengewicht von vorzugsweise 300 bis 2000 g/, insbesondere von 250 bis 1800 g/m².
B. Das erhaltene Mischvlies wird ein- oder beidseitig durch Nadeln verfestigt. Dies kann auf üblichen Nadelstühlen mit Filznadeln geschehen. Durch das Nadeln werden einerseits die Verstärkungsfasern gebrochen, so dass deren mittlere Faserlänge reduziert wird; andererseits wird durch das Nadeln das Mischvlies verfestigt, so dass es in den nachfolgenden Verfahrensstufen problemlos handhabbar ist. Ausserdem bewirkt die Nadelung eine teilweise Orientierung der Verstärkungsfasern in z- Richtung, wodurch der Loft (die Rückstellung des komprimierten Halbzeugs beim Wiedererhitzen) gesteuert werden kann. Diese Orientierung der Verstärkungsfasern in z- Richtung hat ferner zur Folge, dass Fertigteile, die aus den Verbundwerkstoffen hergestellt werden, auch in dieser Richtung eine Verstärkung aufweisen und eine hohe Scherfestigkeit besitzen.
C. Das verfestigte Mischvlies wird, vorzugsweise in einem Umluftofen oder durch IR- Bestrahlung, auf Temperaturen oberhalb der Erweichungstemperatur des Thermoplasten erwärmt. Vorzugsweise sollte die Temperatur 20 bis 60 °C oberhalb der Erweichungstemperatur liegen; bei Polypropylenfasern liegt sie bevorzugt zwischen 180 und 220 °C.
D. Unmittelbar anschliessend wird das erwärmte Mischvlies verpresst. Dies kann auf einem Kalander oder einem Glättwerk geschehen. Vorzugsweise wird aber auf einer Doppelbandpresse verpresst, wobei das Mischvlies erst in einer Heizzone, die auf mehr als 80 °C, insbesondere auf 100 bis 220 °C temperiert ist, bei einem Druck von weniger als 1,0 bar, insbesondere von 0,1 bis 0,8 bar verpresst wird, und dann in einer Kühlzone, die auf weniger als 30 °C, insbesondere auf 15 bis 25 °C temperiert ist, ebenfalls bei einem Druck von weniger als 1,0 bar, insbesondere von 0,1 bis 0,8 bar. Bei derart niedrigen Drücken werden nicht alle Luftblasen aus dem erweichten Mischvlies herausgepresst, so dass die Kernschicht des Verbundwerkstoffs noch 20 bis 80 Vol.%, insbesondere 25 bis 75 Vol.% Luftporen enthält. In der Heizzone werden die Verstärkungsfasern in die Thermoplastschmelze eingedrückt und ausreichend gut benetzt, ausserdem werden hier die Luftblasen teilweise herausgedrückt. In der Kühlzone wird das Halbzeug konsolidiert. In der Heizzone beträgt die Verweilzeit vorzugsweise 5 bis 60 sec, in der Kühlzone kann sie mehrere Minuten betragen. Die Doppelbandpresse enthält Pressplatten, an denen umlaufende Gewebebänder, z.B. mit Teflon beschichteten Glas- oder Aramidgewebe, entlang gleiten. Vorzugsweise ist vor den beheizten Pressplatten noch ein beheiztes Walzenpaar und nach den beheizten Pressplatten ein gekühltes Walzenpaar angeordnet. Das beheizte Walzenpaar dient dabei vor allem dazu, die Funktionsschichten zuzuführen und an das erwärmte Mischvlies anzuhaften.

Erfindungsgemäss werden in Stufe D auf das erwärmte Mischvlies a) Funktionsschichten mit aufgepresst, und zwar entweder auf beiden Seiten ein hydrophobiertes Mischfaservlies b) aus PET-Fasern und PP-Fasern oder auf einer Seite das hydrophobierte Mischfaservlies b) und auf der anderen Seite eine Thermoplastfolie c).

Als Thermoplasten für die Folie c) kommen wiederum die oben genannten Kunststoffe in Frage, darüber hinaus auch Verbundfolien aus Polypropylen und/oder Polyethylen mit Polyamiden oder mit Polyethylenterephthalat Das Flächengewicht der Folie b) beträgt vorzugsweise 50 bis 250 g/m², insbesondere 80 bis 200 g/m².

Hydrophobierte Mischfaservliese b) aus PET-Fasern und PP-Fasern sind im Handel erhältlich, z. B. von den Firmen Freudenberg und Novotex. Die Hydrophobierung geschieht beispielsweise durch langkettige oder aromatische Kohlenwasserstoffe, die gegebenenfalls perfluoriert sein können, beispielsweise durch bestimmte 1,1-Dihydroperfluorpolyacrylsäureester (CₙF₂ₙ₊₁-CH₂-O-CO-CH=CH₂)ₓ, wobei n=3 bis 10, insbesondere 9 ist.

Das Gewichtsverhältnis PET-Fasern zu PP-Fasern beträgt vorzugsweise 80 : 20 bis 40 : 60, insbesondere 70 : 30 bis 40 : 60. Das Flächengewicht des Mischfaservlieses b) beträgt vorzugsweise 30 bis 300 g/m², insbesondere 40 bis 250 g/m².

Der entstandene Verbundwerkstoff weist vorzugsweise eine Dicke von 1 mm bis 10 mm, insbesondere von 2 mm bis 6 mm auf. Die mittlere Länge der Verstärkungsfasern (Gewichtsmittel) beträgt dabei 15 bis 200 mm, vorzugsweise sind sie 20 bis 50 mm lang.

Ein weiterer Gegenstand der Erfindung ist ein thermoplastisch verformbarer, flächiger Verbundwerkstoff, enthaltend
a') eine Kernschicht aus 20 bis 60 Gew.% einer Thermoplastmatrix und 80 bis 40 Gew.% ungerichteten Verstärkungsfasern, die in der Matrix eingebettet und miteinander vernadelt sind,
b') eine oder zwei hydrophobe Deckschichten aus 30 bis 70 Gew.% einer Polypropylenmatrix und 70 bis 30 Gew.% eines Faservlieses aus Polyethylenterephthalatfasern, sowie gegebenenfalls
c') eine Deckschicht aus einem thermoplastischen Kunststoff.

Der Verbundwerkstoff enthält 20 bis 80, vorzugsweise 25 bis 75 Vol.% Luftporen, die vorzugsweise gleichmässig in der Matrix der Kernschicht a') verteilt sind.

Die Deckschicht(en) b'), die im Fertigteil im allgemeinen die Aussenseite darstellt, soll den Schall absorbieren und als Steinschlagschutz dienen. Vor allem aber bewirkt sie infolge der Hydrophobierung, dass kaum Wasser in das Fertigteil eindringen kann. Dieses Wasser würde in den porösen Kern eingesaugt werden und dessen Gewicht stark erhöhen.

Es hat sich gezeigt, dass die Wasseraufnahme des erfindungsgemässen Verbundwerkstoffs unter 10 Gew.%, insbesondere unter 7 Gew.% liegt. Bei Verwendung eines Polyestervlieses ohne Thermoplastmatrix nach dem Stand der Technik (z.B. nach EP-A 758 577) als untere Deckschicht würde Wasser durch die Kapillaren des Vlieses in die Kernschicht eindringen; ausserdem bewirkt die Thermoplastmatrix in der Deckschicht b') eine gute Anbindung an die Kernschicht.

Falls nur auf einer Seite eine Deckschicht b') angebracht ist, ist die andere Seite mit einer Deckschicht c') aus einem thermoplastischen Kunststoff versehen. Diese dient vor allem zur Versteifung des aus dem Verbundwerkstoff hergestellten Fertigteils, ferner soll sie auch das Fertigteil gegen aggressive Medien abdichten.

Der Verbundwerkstoff kann durch Heissverpressen in geeigneten Formen zu dreidimensionalen Fertigteilen umgeformt werden, die im Kraftfahrzeug- Aussenbereich Verwendung finden können, z. B. als Unterböden, Radlaufschalen und Motorraumabschirmung.

## Patentansprüche

1. Kontinuierliches Verfahren zur Herstellung eines thermoplastisch verformbaren Verbundwerkstoffs mit folgenden Verfahrensstufen:
A Thermoplastfasern und Verstärkungsfasern werden trocken miteinander zu einer endlosen Bahn vermischt,
B das erhaltene Mischvlies wird durch Nadeln verfestigt,
C das verfestigte Mischvlies wird auf Temperaturen oberhalb der Erweichungstemperatur des Thermoplasten erwärmt,
D anschliessend wird das erwärmte Mischvlies heiss verpresst,
**dadurch gekennzeichnet, dass** in Stufe D
- auf dem erwärmten Mischvlies a) entweder
- auf beiden Seiten ein hydrophobiertes Mischfaservlies b) aus Polyethylenterephtalatfasem und Polypropylenfasern oder
- auf einer Seite das hydrophobierte Mischfaservlies b)
- und auf der anderen Seite eine Thermoplastfolie c) mitverpresst wird.

2. Verfahren nach Anspruch 1, **dadurch gekennzeichnet, dass** in Stufe D die einzelnen Bahnen folgende Flächengewichte aufweisen:
| | |
|---|---|
| Mischvlies a): | 300 bis 2000 g/m² |
| Mischfaservlies b): | 30 bis 300 g/m² |
| Thermoplastfolie c) | 50 bis 250 g/m² |

3. Verfahren nach Anspruch 1, **dadurch gekennzeichnet, dass** das Verpressen in Stufe D auf einer Doppelbandpresse, einem Kalander oder einem Glättwerk erfolgt.

4. Verfahren nach Anspruch 3, **dadurch gekennzeichnet, dass** das Verpressen auf einer Doppelbandpresse erst in einer Heizzone bei einer Temperatur von mehr als 80 °C bei einem Druck von weniger als 1,0 bar und dann in einer Kühlzone bei einer Temperatur von weniger als 30 °C und einem Druck von weniger als 1,0 bar erfolgt.

5. Thermoplastisch verformbarer, flächiger Verbundwerkstoff, enthaltend
a') eine Kernschicht aus 20 bis 60 Gew.% einer Thermoplastmatrix und 80 bis 40 Gew.% Verstärkungsfasern, die in der Matrix in unregelmässiger Verteilung vorliegen und miteinander vernadelt sind,
b') eine oder zwei hydrophobe Deckschichten aus 30 bis 70 Gew.% einer Polypropylenmatrix und 70 bis 30 Gew.% eines Faservlieses aus Polyethylenterephthaltfasem sowie gegebenenfalls
c') eine Deckschicht aus einem thermoplastischen Kunststoff.

6. Verbundwerkstoff nach Anspruch 5, **dadurch gekennzeichnet, dass** die Kernschicht a') 20 bis 80 Vol.% Luftporen enthält.
